# DEMANDE DE BREVET EUROPEEN

(11) **EP 1 326 148 A2**
(43) Date de publication de la demande: **09.07.2003**
(21) Numéro de dépôt: 02292536.6
(22) Date de dépôt: 15.10.2002
(51) Int. Cl.: G05B 19/05

(54) **Paramétrage et compilation automatique de structures utilisant des réseaux de représentation standard**

(30) Priorité: 31.10.2001 FR 0114144
(71) Demandeur: Crossbee, 75017 Paris (FR)
(72) Inventeur: Hautbergue, Bernard, 94340 Joinville Le Pont (FR); Benoit, Emmanuel, 59270 Merris (FR); Donders, Stéphane, 75017 Paris (FR)
(74) Mandataire: Plaçais, Jean-Yves

(57) **Abrégé**

L'invention concerne un dispositif informatique de modélisation de processus comprenant une mémoire qui, après modélisation de processus d'un utilisateur, comporte au moins une représentation de processus de premier niveau (A) sous forme de réseau constitué d'une pluralité de tâches de premier niveau interconnectables et un mécanisme d'ensemble qui gère le déroulement des tâches de premier niveau. Le processus de premier niveau (A) est associé à au moins un processus de deuxième niveau (B), chaque tâche de premier niveau (M1) étant associée à deux tâches successives interconnectées de deuxième niveau (E1, E10). Une des deux tâches successives de deuxième niveau (E1) peut spécifier une fonction complexe prise en charge par la tâche de premier niveau, l'autre tâche (E10) est une tâche constante. Le mécanisme d'ensemble est un séquenceur unique qui, pour l'exécution d'une tâche de premier niveau, gère au moins les deux tâches de deuxième niveau associées (E1, E10).

## Description

L'invention se rapporte au domaine des applications de processus.

Des modèles de représentation de processus sous forme de réseaux sont connus, par exemple les réseaux de Pétri, GRAFCET. Ces réseaux ne sont utilisés dans la plupart des cas que pour des processus industriels complexes. Ainsi, ces réseaux sont orientés vers la réalisation du processus final, exécutable par un algorithme reconnaissant les concepts développés dans les réseaux de Pétri, appelé séquenceur.

Un problème se pose si un utilisateur désire modifier un réseau de processus industriel complexe notamment à cause de l'orientation de ces réseaux vers la réalisation d'un processus final. De plus, cette orientation tend à limiter l'application à des processus industriels complexes.

L'invention vise notamment à améliorer la situation.

Elle propose à cet effet un dispositif informatique comprenant une première mémoire comportant une représentation de structure arborescente constituée d'une pluralité de modules interconnectables successifs et une entité de traitement capable de travailler avec la première mémoire.

Selon une caractéristique de l'invention, l'entité de traitement est capable de définir un paramètre, d'attribuer ce paramètre à un module donné parmi la pluralité de modules interconnectables et d'instituer un héritage de ce paramètre à un module interconnectable situé en aval du module donné parmi la pluralité de modules interconnectables.

Selon une autre caractéristique de l'invention,le dispositif informatique comprend un compilateur capable de travailler avec la première mémoire pour récupérer la structure arborescente et capable d'enregistrer dans une seconde mémoire le paramètre attribué pour le module donné et ce paramètre hérité pour le module interconnectable situé en aval du module donné.

Dans une réalisation avantageuse de l'invention, l'entité de traitement est capable de traiter une requête par lecture d'un paramètre relatif à un module interconnectable dans la seconde mémoire.

Dans une autre réalisation avantageuse de l'invention, l'entité de traitement est capable d'enregistrer dans la seconde mémoire, sur requête, un paramètre modifié relatif à un module interconnectable.

Avantageusement, l'entité de traitement est capable d'instituer un héritage du paramètre à un groupe de modules interconnectables situés en aval du module donné parmi la pluralité de modules interconnectables.

Selon un aspect de l'invention, l'entité de traitement est capable d'associer au module donné une structure arborescente supplémentaire et d'instituer un héritage du paramètre du module donné à au moins une partie de ladite structure arborescente supplémentaire.

Selon un aspect particulier de l'invention, le paramètre comprend une règle, une variable.

Selon une réalisation particulière de l'invention, la structure arborescente est une structure d'organisation et le paramètre comprend une règle d'organisation concernant une hiérarchie de fonctions et/ou une variable définissant ces fonctions.

Selon une réalisation complémentaire de l'invention, la structure arborescente est une structure d'organisation et en ce que le paramètre comprend une variable définissant des responsabilités et ou des responsabilités issues de fonctions.

Selon une autre réalisation complémentaire de l'invention, la structure arborescente est une structure d'organisation et en ce que le paramètre comprend une information concernant un utilisateur rattaché à un module interconnectable de la structure arborescente.

Selon une réalisation optionnelle de l'invention, l'entité de traitement est capable d'attribuer une pluralité de paramètres à au moins un module donné parmi la pluralité de modules interconnectables.

De plus, l'invention concerne un produit logiciel comprenant une interface utilisateur propre à élaborer la représentation de la structure arborescente du dispositif de l'invention.

L'invention concerne également un dispositif informatique de modélisation de processus comprenant une mémoire comportant, après modélisation de processus d'un utilisateur, au moins une représentation de processus de premier niveau sous forme de réseau constitué d'une pluralité de tâches de premier niveau interconnectables et un mécanisme d'ensemble pour gérer le déroulement des tâches de premier niveau selon certaines conditions.

Selon une caractéristique de l'invention, le processus de premier niveau est associé à au moins un processus de deuxième niveau, chaque tâche de premier niveau étant associée à deux tâches successives interconnectées de deuxième niveau, une des deux tâches successives de deuxième niveau pouvant spécifier une fonction complexe prise en charge par la tâche de premier niveau, l'autre tâche étant une tâche constante.

Selon une autre caractéristique de l'invention, le mécanisme d'ensemble est un séquenceur unique capable, pour l'exécution d'une tâche de premier niveau, de gérer au moins les deux tâches de deuxième niveau associées.

Dans une réalisation avantageuse de l'invention, au moins une des deux étapes successives de deuxième niveau spécifiant une fonction complexe est associée à au moins un processus de troisième niveau réalisant ladite fonction complexe exécutée par le séquenceur unique, ledit processus de troisième niveau comprenant au moins deux tâches de troisième niveau interconnectées.

Dans une autre réalisation avantageuse de l'invention, le séquenceur unique est un algorithme d'exécution de tâches capable de s'appeler lui-même pour exécuter en parallèle une première tâche d'un certain niveau et au moins une deuxième tâche associée d'un autre niveau.

Avantageusement, certaines conditions comprennent la présence d'un élément appelé "jeton" associé à l'état d'avancement du processus.

Selon un aspect de l'invention, la représentation de processus de premier niveau comprend une structure arborescente d'objets.

Selon un aspect particulier de l'invention, la structure arborescente d'objets comprend au moins une tâche de premier niveau pouvant être associée à au moins une variable, cette tâche de premier niveau étant associée à au moins deux tâches successives interconnectées du processus de deuxième niveau, au moins une des deux tâches ayant pour paramètre au moins ladite variable.

Selon une réalisation complémentaire de l'invention, le séquenceur unique est capable d'exécuter, à chaque tâche du processus de premier niveau, au moins les deux tâches successives de deuxième niveau selon au moins ladite variable.

Selon un autre aspect particulier de l'invention, la structure arborescente d'objets comprend au moins une tâche de premier niveau pouvant être associée à au moins une règle, cette tâche de premier niveau étant associée à au moins deux tâches successives interconnectées du processus de deuxième niveau, au moins une des deux tâches ayant pour paramètre au moins ladite règle.

Selon une réalisation complémentaire de l'invention, le séquenceur unique est capable d'exécuter, à chaque tâche du processus du premier niveau, au moins les deux tâches successives de deuxième niveau selon au moins ladite règle.

Selon une réalisation optionnelle de l'invention, dans la structure arborescente d'objets, certaines des tâches de deuxième niveau spécifiant une fonction complexe définissent une même fonction complexe.

Optionnellement, ladite même fonction complexe est désignée selon une variable globale passée en paramètre.

L'invention concerne également un produit logiciel comprenant une interface utilisateur propre à élaborer la représentation de processus.

Dans une réalisation optionnelle, l'interface utilisateur comprend un éditeur de graphe.

Dans une autre réalisation optionnelle, l'interface utilisateur comprend un éditeur de règles.

D'autres caractéristiques et avantages de l'invention apparaîtront à l'examen de la description détaillée ci-après, des dessins annexés sur lesquels :
- la figure 1 illustre un environnement matériel dans lequel est réalisé l'invention.
- la figure 2 illustre un réseau représentant un processus,
- la figure 3 représente schématiquement une structure de réseau représentant un processus selon l'invention,
- la figure 4 représente une forme réseau simple de la structure de la figure 3,
- la figure 5 représente une forme réseau simple associée à une forme réseau complexe de la structure de la figure 3,
- la figure 6 représente un exemple de réalisation de la forme réseau complexe de la figure 5,assorti d'étiquettes en langage de programmation,
- la figure 7 représente un exemple de réalisation présentant une structure arborescente d'objets selon l'invention,
- la figure 8 représente un exemple de réalisation d'une forme réseau complexe selon l'invention,
- la figure 9 représente un ordinogramme de la définition d'une structure arborescente d'objets à un utilisateur avant utilisation,
- la figure 10 représente un ordinogramme d'utilisation de la structure arborescente d'objets définie selon l'ordinogramme de la figure 9.

Les dessins contiennent, pour l'essentiel, des éléments de caractère certain. Ils pourront donc non seulement servir à mieux faire comprendre la description, mais aussi contribuer à la définition de l'invention, le cas échéant.

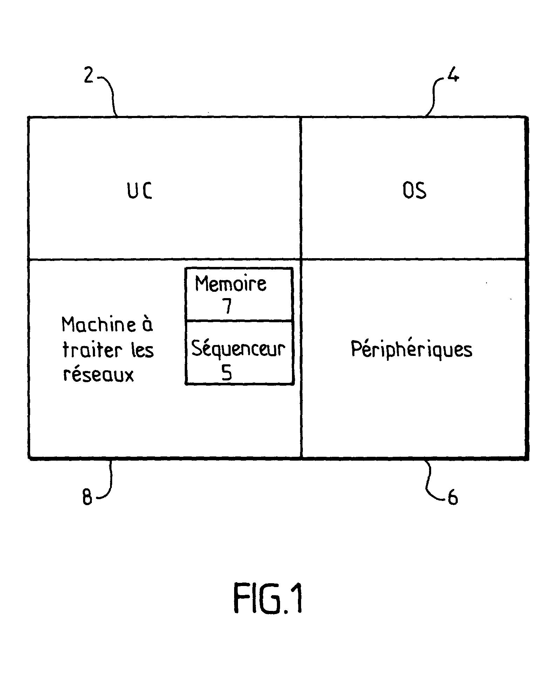

La figure 1 représente un environnement de matériel informatique comprenant une unité centrale 2 reliée à un système d'exploitation 4, une machine à traiter les réseaux 8 et des périphériques 6. La machine à traiter les réseaux 8 comporte un logiciel, une mémoire 7 comprenant une représentation de processus après modélisation de ce processus, un séquenceur 5 décrit ci-après selon l'invention.

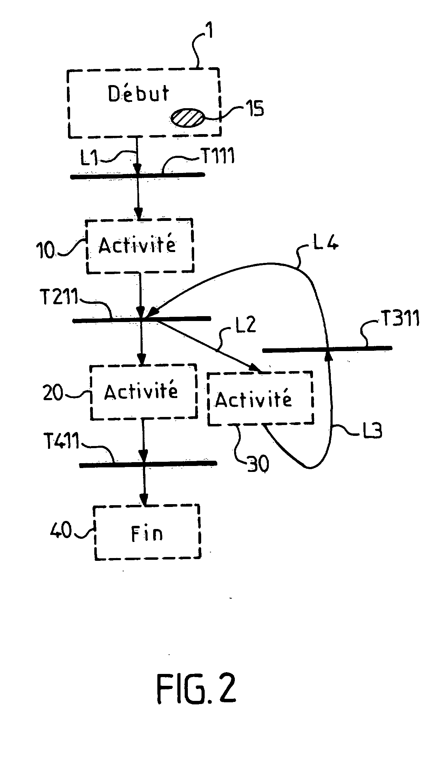

Il est connu de représenter graphiquement des processus sous forme de réseaux classiques tels que le réseau de Pétri, de Grafcet ou de blocs fonctionnels. Ces modèles sont utilisés notamment pour des descriptions de processus industriels complexes. Comme présentée sur la figure 2, une représentation hybride est adoptée dans la suite de la description, adaptable aux représentations classiques. Ainsi, la figure 2 présente un modèle de représentation de processus avec des concepts développés par les réseaux. Le modèle est défini à partir de différents concepts:
- un noeud, appelé également place, activité ou tâche, représente une étape de processus, comme par exemple les places 1, 10, 20, 30 et 40; une transition est située entre deux places successives;
- un jeton 15 représente l'état d'avancement du processus, le passage du jeton d'une place à une autre est fonction de la validité des transitions;
- une transition, appelée également condition, comme T111, T211, T311 ou T411, supporte une condition de passage d'un jeton d'une place à la suivante, cette condition utilise des variables définies sur le réseau.
- un lien, par exemple L1, est un chemin possible entre une place et une transition; une succession de liens, comme par exemple L2, L3 et L4, peut définir une boucle partant, dans l'exemple, de la même transition T2 et arrivant à cette même transition T2;
- une variable est définie par un nom et une valeur; une variable locale est limitée au réseau sur lequel elle est définie, une variable globale est limitée à un ensemble de réseaux sur lequel elle est définie; la valeur des variables peut être modifiée sur une place et testée sur une transition.

D'autre part, des opérations logiques peuvent être représentées, par exemple les opérations ET convergent, ET divergent, OU convergent, OU divergent, OU exclusif. La représentation de ces opérations se fait en utilisant une combinaison particulière de liens et de transitions.

Dans la description, le terme module représente un élément d'un graphe par exemple. Ce terme peut également définir un noeud (c'est-à-dire une place ou une tâche) d'un processus dit de premier niveau.

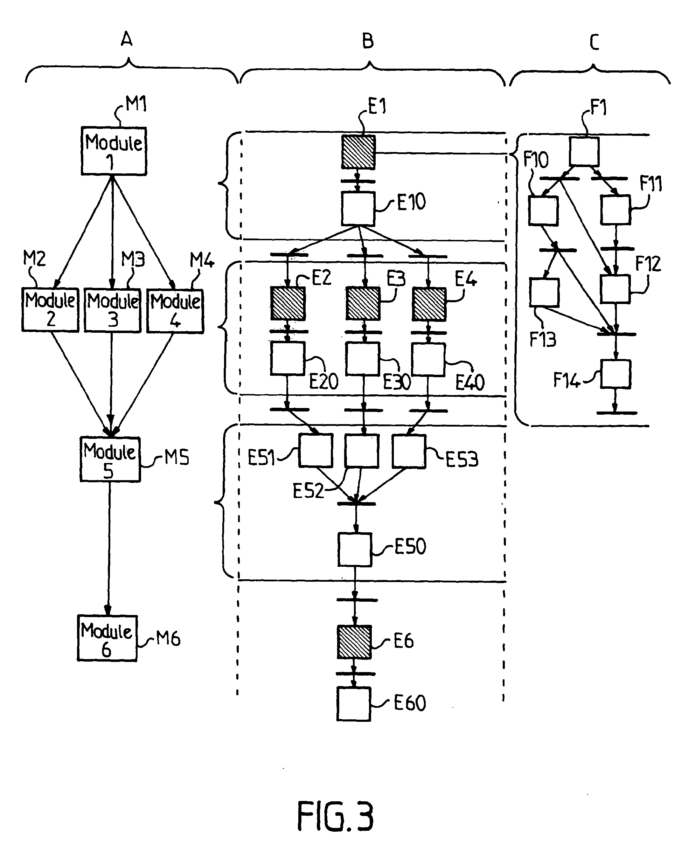

La figure 3 illustre, en partie A, un processus sous forme d'un graphe de modules. Chaque module représente une partie de processus complexe. Le graphe est constitué d'un module M1 relié en parallèle selon trois conditions distinctes aux modules M2, M3 et M4. Ces derniers sont reliés selon trois autres conditions distinctes au module M5, lui-même relié, selon une condition, au module M6.

Cette représentation est destinée à l'utilisateur final qui peut définir ou simplement observer la partie de processus liée aux modules. Cette représentation est notamment générée par un éditeur spécifique. Chaque module prend en charge une fonction complexe du processus.

Ainsi, la représentation du processus sous forme de modules est reliée à la représentation du processus équivalent sous forme de réseau simplifié selon la partie B de la figure 3.

Chaque module de la partie A est représenté par deux places successives reliées par une transition selon la partie B.

La condition entre deux modules successifs de la partie A est représentée par une transition équivalente dans la partie B.

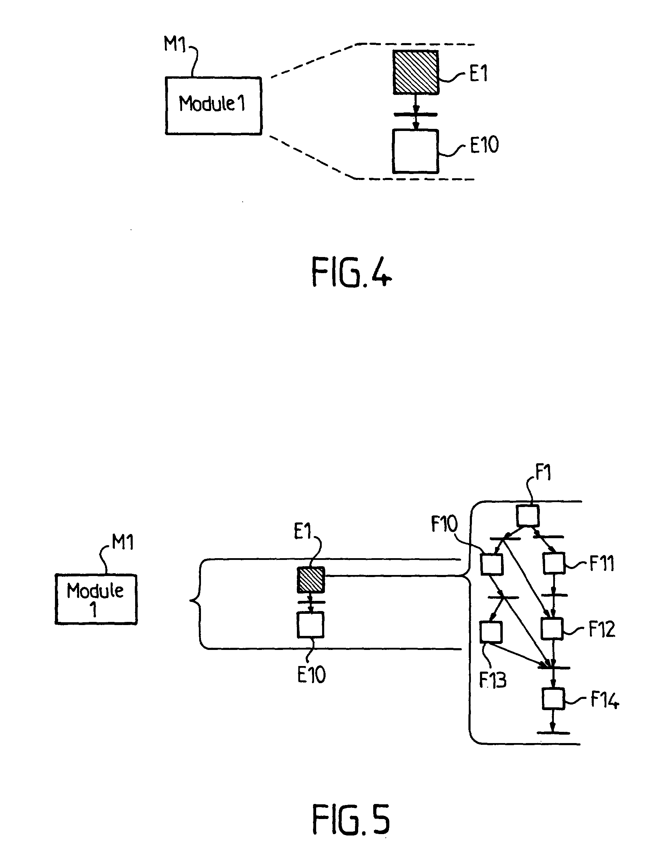

Ainsi, selon la figure 4, le module M1 est représenté par une succession d'une place E1, d'une transition et d'une place E10.

Dans une réalisation, E1 définit une place spécifiant la fonction complexe prise en charge par le module correspondant M1. La transition est toujours validée et la place E10 ne comporte pas de fonction spécifique, E10 est constante.

Dans une autre réalisation, la place E1 ne comporte pas de fonction spécifique, E1 est constante. La transition est toujours validée. E10 définit une place spécifiant la fonction complexe prise en charge par le module correspondant M1.

Dans la figure 3, les modules M2, M3, M4 et M6 sont reliés chacun à la représentation du processus équivalent sous forme de réseau simplifié. Ainsi, pour ces modules, le processus équivalent est représenté respectivement par deux places successives E2 et E20, E3 et E30, E4 et E40, E6 et E60.

Le module M5 définit entre autre un module de convergence entre les modules M2, M3 et M4 d'une part et le module M6 d'autre part. Ainsi, le module M5 est reliée à la représentation du processus équivalent sous forme de réseau simplifié. Ce processus équivalent est représenté par les places E51, E52 et E53 en parallèle reliées à une transition à la place E50 de façon à définir une opération logique ET convergent.

Un séquenceur est défini comme un mécanisme d'ensemble permettant d'exécuter les tâches successives d'un processus lorsqu'il est défini sous forme de réseau avec les concepts réseau.

Cette représentation, remplaçant tous les modules par un équivalent standard sous forme de réseau, est utilisée pour qu'un séquenceur puisse notamment exécuter, module après module, le processus défini pour l'utilisateur final. Cette représentation permet de synchroniser un module avec ses prédécesseurs et ses successeurs.

La place grisée E1 de la partie B spécifiant une fonction complexe est associée à une représentation de réseau équivalent complexe illustrée en partie C de la figure 3. Ainsi, chaque place grisée E2, E3, E4 et E6 spécifie une fonction complexe associée à une représentation de réseau équivalent complexe. Ce réseau équivalent complexe représente le processus lié à la fonction complexe.

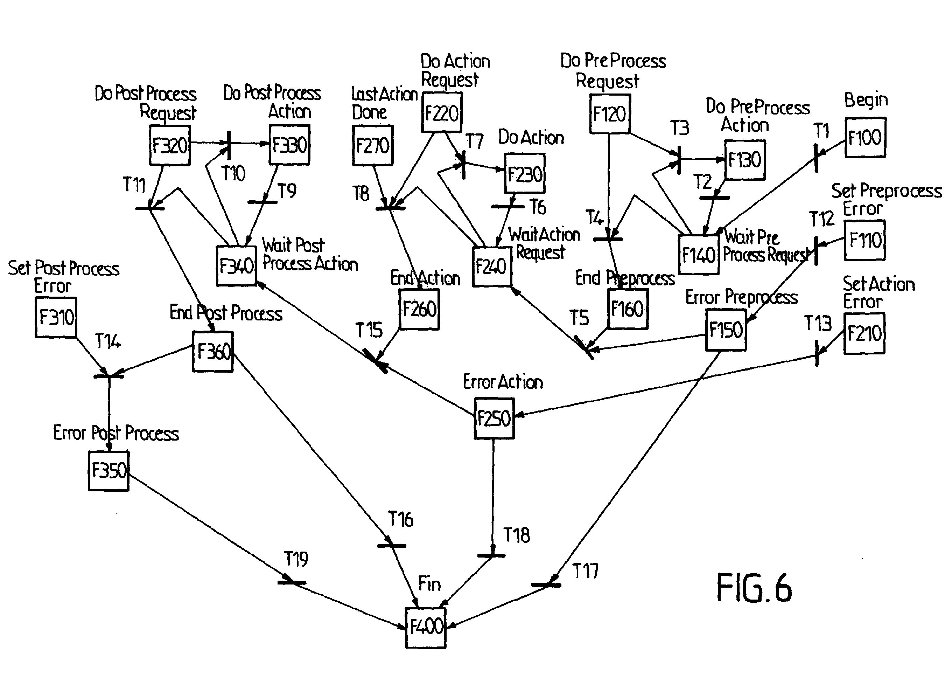

L'exemple du module 1 associé à une représentation de deux places équivalentes sous forme de réseau simplifié est plus particulièrement illustré sur la figure 5. Dans cet exemple, la première des deux places est associée à une représentation de réseau équivalent complexe. Dans une autre réalisation, la deuxième des deux places est associée à une représentation de réseau équivalent complexe. La place associée à une représentation de réseau équivalent complexe est appelée "place à équivalence complexe".

Ainsi, la place E1 est associée à un processus lié à la fonction complexe. Ce processus comprend des places F1, F10, F11, F12, F13 et F14 reliées entre elles par des transitions de manière à former un processus répondant aux exigences du module 1. Cette représentation détaillée est utilisée pour spécifier la fonction complexe prise en charge par un module dans l'exécution générale du processus. Cette représentation est utilisée pour calculer les fonctions internes du module.

Une place du processus équivalent sous forme de réseau simplifié est avantageusement un objet au sens d'un objet défini en programmation orientée objet.

Le langage privilégié dans le reste de la description concernant les objets fait référence aux objets définis dans le langage de programmation java dans les références suivantes :
http://Java.sun.com pour Java
http://Java.sun.com/beans/spec.html pour JavaBeans
et/ou les documents imprimés correspondants, par exemple "The Java Language Specification", J. GOSLING, Bill Joy, Guy STEELE, Addison Wesley, 1996, ISBN 0-201-63451-1.
Toutefois, tout autre langage de programmation objet peut être utilisé, tel que le langage C++ défini à la référence suivante : "The C programming language", Brian W. Kernighan, Dennis M. Ritchie.

Une classe mère est définie avec des attributs et des méthodes, notamment une méthode d'exécution appelée *run()* ne définissant pas de paramètres et un attribut dont la valeur signifie la présence ou l'absence d'un jeton. Cette classe mère permet d'instancier les objets que sont les places du processus équivalent sous forme de réseau simplifié.

Avantageusement, les places du processus lié à la fonction complexe (partie C) sont définies comme des objets instanciés à partir d'une classe étendue de la classe mère, dite classe fille. Cette classe fille hérite des attributs et des méthodes de la classe mère et définit d'autres méthodes et attributs qui lui sont propres. De plus, chaque objet ainsi instancié peut utiliser une bibliothèque d'informations stockées dans une base de données par exemple. Ainsi, la méthode d'exécution *run()* des objets instanciés à partir de la classe fille peut avoir pour paramètre, par exemple, des méthodes stockées dans une base de données.

Selon une réalisation, le système utilise l'algorithme que définit le séquenceur pour exécuter les places du processus équivalent sous forme de réseau simplifié. Pour chaque place à équivalence complexe dont l'attribut précise la présence d'un jeton, le séquenceur est apte à s'appeler lui-même pour exécuter le processus lié à la fonction complexe. Ainsi, le séquenceur est apte à exécuter les fonctions internes de chaque module, notamment les méthodes *run()* des places définies dans le processus lié à la fonction complexe.

Le séquenceur est défini comme un algorithme récursif ou réentrant, c'est-à-dire que cet algorithme est apte à s'appeler lui-même.

Cette représentation de processus en trois niveaux différents (partie A, partie B, partie C) permet une description utilisateur simple, transformée en une suite de représentations complexes et exécutables par un algorithme unique standard et récursif, le séquenceur. De plus, certains attributs ou méthodes peuvent être modifiés de façon unique, les règles d'héritage intervenant pour propager la modification dans les différentes places concernées.

La figure 6 présente un exemple de réseau pour effectuer une fonction particulière associée à un module de la partie A de la figure 5. La figure 6 présente une forme complexe (correspondant à la partie C de la figure 5) d'un processus de validation mettant en oeuvre un système de négociation entre un demandeur et un exécuteur. Ce processus correspond à un algorithme externe affecté au module lors d'une phase de configuration.

Ce processeur peut être associé à l'une des trois phases d'exécution suivantes:
- Pré-process : action automatique exécutée au début de chaque module,
- Process : action programmée lors de la phase de configuration. Cette phase est adaptée notamment aux actions de type utilisateur (saisie d'informations par exemple). Une action utilisateur peut utiliser un principe de connecteur indépendant qui permet de démarrer des processus externes, par exemple un sous processus, une fonction indépendante.
- Post-process : action automatique exécutée systématiquement en fin de module.

Une action peut également être associée à d'autres phases d'exécution du réseau. D'autre part, un process peut consister à ne rien faire. Plus généralement, des phases d'exécution peuvent ne définir aucune action particulière.

Le pré-process commence à la place F100. Après la transition T1, la place F140 permet d'attendre la requête du pré-process. La place F120 permet d'effectuer le pré-process. Les places F140 et F120 sont toutes les deux reliées aux transitions T3 et T4 qui permettent respectivement de passer à la place F130 afin d'effectuer l'action du pré-process, et de passer à la place F160 de fin du pré-process. La place F130 est d'autre part reliée par une transition T2 à la place F140.

Une place F110 permet de déterminer une erreur survenue au niveau du pré-process. Cette place est reliée par une transition T12 à la place F150 permettant de désigner l'erreur du pré-process. Cette place F150 est associée à la transition T5 avec la place F160. Cette place F150 est également associée à la transition T17 pour arriver à l'étape F400 de fin de l'action en cours.

Après la transition T5, la place F240 permet d'attendre la requête du process. La place F220 permet d'effectuer le process. Les places F240 et F220 sont toutes les deux reliées aux transitions T7 et T8 qui permettent respectivement de passer à la place F230 afin d'effectuer le dernier process, et de passer à la place F260 de fin du process. Une place F270 qui permet de déterminer la dernière action du processus est reliée à la place F260 par la transition T8. La place F230 est d'autre part reliée par une transition T6 à la place F240.

Une place F210 permet de déterminer une erreur survenue au niveau du process. Cette place est reliée par une transition T13 à la place F250 permettant de désigner l'erreur du process. Cette place F250 est associée à la transition T15 avec la place F260. Cette place F250 est également associée à la transition T18 pour arriver à l'étape F400 de fin de l'action en cours.

Après la transition T15, la place F340 permet d'attendre la requête du post-process. La place F320 permet d'effectuer le post-process. Les places F340 et F320 sont toutes les deux reliées aux transitions T10 et T11 qui permettent respectivement de passer à la place F330 afin d'effectuer l'action du post-process, et de passer à la place F360 de fin du post-process. La place F330 est d'autre part reliée par une transition T9 à la place F340.

Une place F310 permet de déterminer une erreur survenue au niveau du post-process. Cette place est reliée par une transition T14 à la place F350 permettant de désigner l'erreur du post-process. La place F360 est également reliée par la transition T14 à la place F350. Cette place F350 est associée à la transition T19 pour arriver à l'étape F400 de fin de l'action en cours. La place F360 est également associée à la transition T16 pour arriver à l'étape F400.

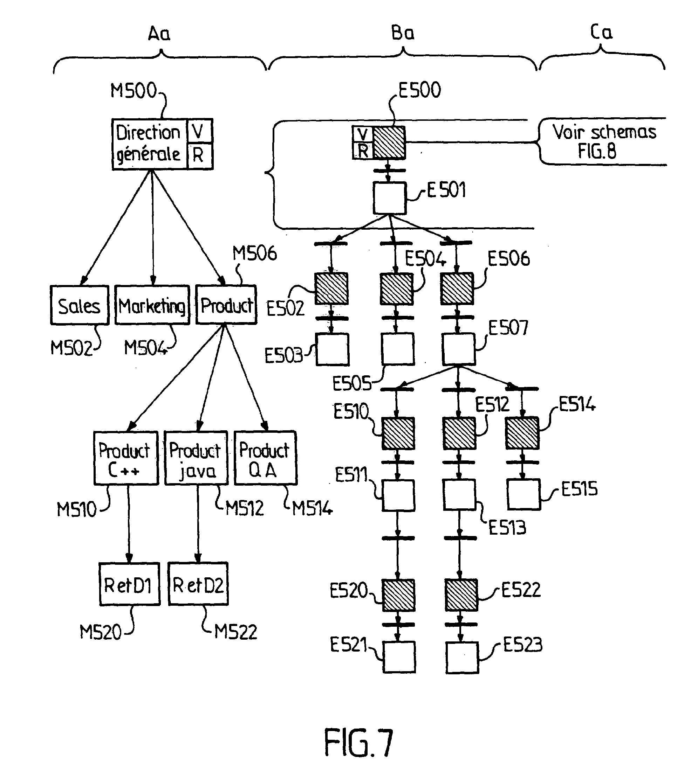

Un mode de réalisation de l'invention est présenté sur les figures 7 à 10. Ce mode de réalisation présente une application des éléments décrits ci-dessus pour la mise en place d'une structure arborescente d'objets. Dans l'exemple de réalisation décrit, la structure arborescente d'objets est appliquée à une entreprise.

La figure 7 présente une structure arborescente d'objets Aa permettant de définir, sous forme de modules, la structure hiérarchique de l'entreprise. Ainsi, le module M500 représente le module de la direction générale relié aux modules du service des ventes M502, du marketing M504, de la production M506. Le module du service de la production est lui-même relié aux modules du service du produit C++ M510, du produit java M512, du produit QA M514. Le module du service du produit C++ M510 est relié au module du service Recherche et Développement 1 M520. Le module du service du produit java M521 est relié au module du service Recherche et Développement 2 M522. Chaque module est relié au module suivant en fonction d'une condition de passage.

La structure arborescente d'objets Aa est associée à une structure équivalente standard sous forme de réseau Ba. Ainsi, comme décrit plus haut, le module M500 est associé à un équivalent standard sous forme de réseau composé de deux places successives E500 et E501 reliées par une transition. Les module M502, M504 et M506 sont associés chacun à un équivalent standard sous forme de réseau composé de deux places successives, respectivement E502 et E503, E504 et E505, E506 et E507, reliées entre-elles par une transition.

Les module M510, M512 et M514 sont associés chacun à un équivalent standard sous forme de réseau composé de deux places successives, respectivement E510 et E511, E512 et E513, E514 et E515, reliées entre-elles par une transition.
Le module M520 est associé à un équivalent standard sous forme de réseau composé de deux places successives E520 et E521 reliées par une transition. Le module M522 est associé à un équivalent standard sous forme de réseau composé de deux places successives E522 et E523 reliées par une transition.

Chaque ensemble de deux places successives reliées par une transition est relié à l'ensemble suivant par une transition correspondant à la condition de passage entre un module et le module suivant. Ainsi, le séquenceur peut atteindre une place à équivalence complexe si la transition en amont est valide.

Dans une réalisation avantageuse, des variables V sont associées à au moins certains modules, par exemple M500, et à la place à équivalence complexe associée, par exemple E500. Ces variables V sont par exemple des attributs dans le cas d'objet (au sens programmation orientée objet). Ces variables V peuvent être des définitions de fonctions applicables dans l'entreprise, des définitions de responsabilités, des définitions d'équipes.

Dans une autre réalisation, des règles R sont associées à au moins certains modules, par exemple M500, et à la place à équivalence complexe associée, par exemple E500. Ces règles, définies plus amplement ci-après, peuvent comprendre des règles d'organisation concernant la hiérarchie des fonctions, des responsabilités issues de fonction.

Dans l'exemple de la réalisation proposée, chaque place à équivalence complexe est associée à un même réseau équivalent complexe représentant le processus lié à la fonction complexe Ca.

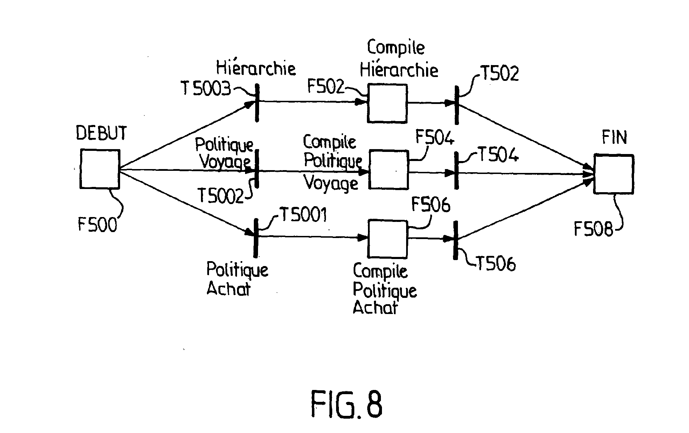

La figure 8 illustre le réseau équivalent complexe de l'exemple de la figure 7. Ainsi, la place F500 représente le début du processus. Les transitions T5003, T5002, T5001 en parallèle permettent d'orienter le séquenceur respectivement vers une place de compilation de hiérarchie F506, une place de compilation de politique de voyage F504, une place de compilation de politique d'achat F502. Une fois l'exécution de la place F502, F504 ou F506 terminée, les transitions T502, T504, T506 permettent d'autoriser la fin du processus sur une place F508.

Lors de la mise en route du séquenceur, certains paramètres sont définis, comme un paramètre permettant de choisir entre l'exécution d'une compilation de la structure hiérarchique, l'exécution d'une compilation d'une politique de voyage et l'exécution d'une compilation de politique d'achat. Dans une réalisation de l'invention, ce paramètre est une variable globale.

Ainsi, le séquenceur est orienté vers l'une des trois exécutions pour chaque place à équivalence complexe en fonction de ce cette variable globale.

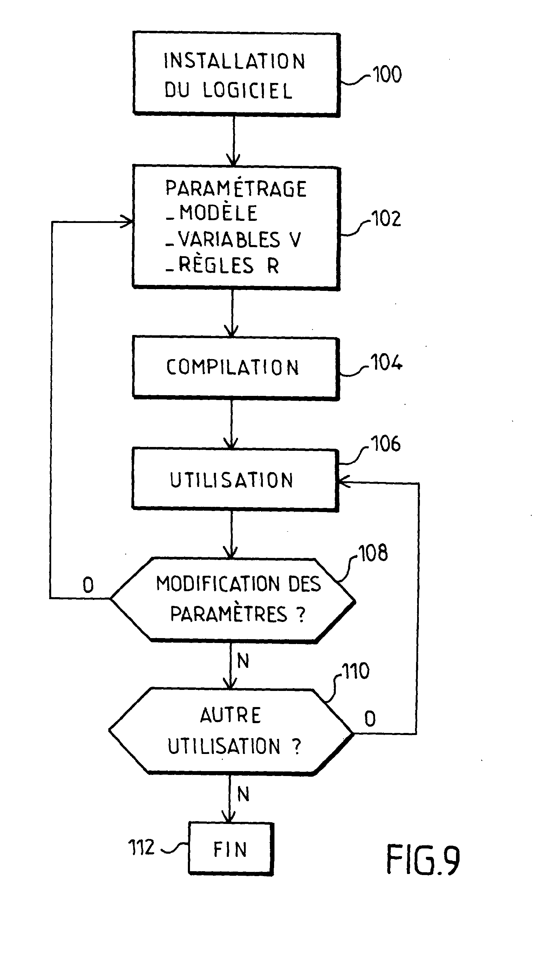

La figure 9 illustre un ordinogramme de mise en place chez un utilisateur d'un outil permettant de déterminer une structure organisationnelle selon une réalisation de l'invention. Cet outil comprend un moteur, un configurateur permettant de définir la structure, des variables, des règles (méthodes et attributs des objets) et une base de donnée. Le configurateur comporte un éditeur de graphe propre à définir la structure organisationnelle, certaines variables et un éditeur de règles propre à définir des règles. Le moteur comporte le séquenceur et des connecteurs.

Un connecteur peut être défini comme une interface permettant l'exécution par exemple d'un processus, l'exécution pouvant être synchrone ou asynchrone.

L'outil est tout d'abord installé à l'étape 100 chez l'utilisateur. L'étape 102 permet de créer une structure d'organisation hiérarchique dans l'exemple de réalisation présenté. L'exemple de structure d'organisation est donné pour une entreprise de voyage. Ainsi, un modèle organisationnel est tout d'abord créé via un outil graphique appelé éditeur de graphe. Les modules et les places associées du modèle sont également appelés unités d'organisation. Une entité à organiser est définie comme un ensemble d'unités d'organisation ayant une dimension transversale en commun. L'arborescence hiérarchique est créée et est définie différemment pour chaque entité à organiser de l'entreprise. Un ensemble de variables V, telles que définies précédemment, est associé à au moins certaines des unités d'organisation.

Un ensemble de règles R est associé à certaines au moins des unités d'organisation par l'éditeur de règles. Ces règles R comprennent par exemple
- des règles de politique de voyages concernant des produits, des itinéraires, le modèle d'organisation, le profil d'un utilisateur, des opérateurs, les conditions de voyage;
- des règles de politique d'achat concernant des produits, des tarifs, des remises à priori et à posteriori, l'évolution des remises, le cumul de remises, des conditions pour y accéder, avec paramètres et objectifs.

Ces règles R et ces variables V dépendent également des unités d'organisation considérées.

Dans le cas des unités d'organisation qui n'ont pas de règles et/ou de variables directement associées, des principes d'héritage s'appliquent. En d'autres termes, ces unités d'organisation héritent des règles et/ou des variables des unités d'organisation en amont dans le modèle.

Dans la suite de la description, le terme compilation signifie que le moteur inscrit dans une base de donnée ou sous tout autre format les paramètres correspondant à la compilation demandée.

Une fois définie ces paramètres que sont le modèle organisationnel, les règles et les variables, l'étape 104 permet de compiler. Ainsi, comme proposé dans la figure 8, un paramètre de choix de compilation permet d'effectuer soit la compilation du modèle organisationnel, soit la compilation d'une politique de voyage, soit la compilation d'une politique d'achat. Avantageusement, les trois compilations sont réalisées successivement. Le séquenceur permet, comme décrit précédemment, d'effectuer le processus équivalent complexe définissant les compilations possibles.

La compilation du modèle organisationnel implique l'enregistrement des informations concernant les unités d'organisation et les utilisateurs concernés, les liens de responsabilité, les hiérarchies, et ceci par entité à organiser. La compilation d'une politique de voyage implique l'enregistrement des informations concernant les règles de voyage applicables sur chaque unité d'organisation et ceci par entité à organiser. Enfin, la compilation d'une politique d'achat implique l'enregistrement des informations concernant les règles d'achat applicables sur chaque unité d'organisation et ceci par entité à organiser.

A l'étape 106, un utilisateur peut, sur requête, utiliser la structure organisationnelle pour obtenir des renseignements qui sont délivrés sans calcul, par exemple lus dans une base ou sous tout autre format.

A l'étape 108, les paramètres peuvent être modifiés sur demande d'un utilisateur. Le processus retourne à l'étape 102 afin de redéfinir certains paramètres puis d'effectuer une compilation adéquate à la modification des paramètres.

Si les paramètres ne sont pas modifiés, l'utilisateur a le choix de réutiliser la structure organisationnelle ou non à l'étape 110. Dans le cas d'une utilisation, le processus reprend à l'étape 106. Dans l'autre cas, le processus est terminé à l'étape 112.

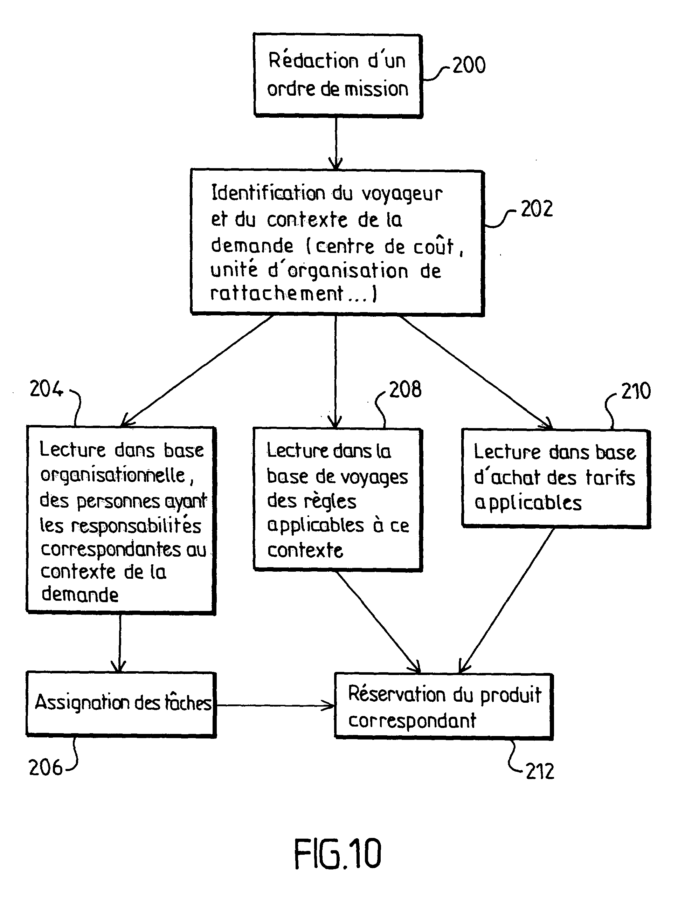

La figure 10 illustre plus particulièrement l'utilisation de la structure organisationnelle de l'étape 106 de la figure 9 par un employé désirant effectuer un voyage.

Ainsi, l'utilisateur est amené à rédiger une requête, appelée également ordre de mission à l'étape 200. L'employé est identifié ainsi que le contexte de la demande à l'étape 202.

Dans une partie de la base contenant la structure organisationnelle, le moteur lit les variables définissant le nom des personnes ayant les responsabilités correspondant à la requête à l'étape 204. Les prises de décision sont assignées à ces personnes à l'étape 206.

Parallèlement à l'étape 204, dans une autre partie de la base contenant les règles applicables à la politique de voyage, le moteur lit les variables définissant les règles de voyage correspondant à la requête à l'étape 208.

Parallèlement à l'étape 208, dans une partie différente de la base contenant les règles applicables à la politique d'achat, le moteur lit les variables définissant les règles d'achat correspondant à la requête à l'étape 210.

Après les tâches 208, 210 et 206, l'étape 212 permet la réservation du produit, ici du voyage, correspondant à la requête de l'étape 200.

Bien entendu, l'invention n'est pas limitée à la forme de réalisation décrite précédemment à titre d'exemple, elle s'étend à d'autres variantes.

L'objet de l'invention peut être réalisé dans le cadre d'un logiciel. Il peut être réalisé pour être vendu en module indépendant pour être intégrer à un produit logiciel, par exemple être vendu à des intégrateurs ou des éditeurs de logiciel.

## Revendications

1. Dispositif informatique comprenant une première mémoire (7) comportant une représentation de structure arborescente constituée d'une pluralité de modules interconnectables successifs (M500, M506, M510) et une entité de traitement (8) capable de travailler avec la première mémoire,
**caractérisé en ce que** l'entité de traitement (8) est capable de définir un paramètre, d'attribuer ce paramètre à un module donné parmi la pluralité de modules interconnectables et d'instituer un héritage de ce paramètre à un module interconnectable situé en aval du module donné parmi la pluralité de modules interconnectables.

2. Dispositif informatique selon la revendication 1, **caractérisé en ce qu'**il comprend un moyen de compilation capable de travailler avec la première mémoire pour récupérer la structure arborescente et capable d'enregistrer dans une seconde mémoire le paramètre attribué pour le module donné et ce paramètre hérité pour le module interconnectable situé en aval du module donné.

3. Dispositif informatique selon les revendications 1 et 2, **caractérisé en ce que** l'entité de traitement est capable de traiter une requête par lecture d'un paramètre relatif à un module interconnectable dans la seconde mémoire.

4. Dispositif informatique selon la revendication 3, **caractérisé en ce que** l'entité de traitement est capable d'enregistrer dans la seconde mémoire, sur requête, un paramètre modifié relatif à un module interconnectable.

5. Dispositif informatique selon l'une des revendications 1 à 4, **caractérisé en ce que** l'entité de traitement est capable d'instituer un héritage du paramètre à un groupe de modules interconnectables situés en aval du module donné parmi la pluralité de modules interconnectables.

6. Dispositif informatique selon l'une des revendications 1 à 5, **caractérisé en ce que** l'entité de traitement est capable d'associer au module donné une structure arborescente supplémentaire et d'instituer un héritage du paramètre du module donné à au moins une partie de ladite structure arborescente supplémentaire.

7. Dispositif informatique selon l'une des revendications 1 à 6, **caractérisé en ce que** le paramètre comprend une règle (R).

8. Dispositif informatique selon l'une des revendications 1 à 7, **caractérisé en ce que** le paramètre comprend une variable (V).

9. Dispositif informatique selon l'une des revendications 1 à 8, **caractérisé en ce que** la structure arborescente est une structure d'organisation et **en ce que** le paramètre comprend une règle d'organisation concernant une hiérarchie de fonctions et/ou une variable définissant ces fonctions.

10. Dispositif informatique selon l'une des revendications 1 à 9, **caractérisé en ce que** la structure arborescente est une structure d'organisation et **en ce que** le paramètre comprend une variable définissant des responsabilités et/ou des responsabilités issues de fonctions.

11. Dispositif informatique selon l'une des revendications 1 à 10, **caractérisé en ce que** la structure arborescente est une structure d'organisation et **en ce que** le paramètre comprend une information concernant un utilisateur rattaché à un module interconnectable de la structure arborescente.

12. Dispositif informatique selon l'une des revendications 1 à 11, **caractérisé en ce que** l'entité de traitement est capable d'attribuer une pluralité de paramètres à au moins un module donné parmi la pluralité de modules interconnectables.

13. Produit logiciel comprenant une interface utilisateur propre à élaborer la représentation de la structure arborescente du dispositif selon l'une des revendications 1 à 12.

14. Produit logiciel selon la revendication 13, **caractérisé en ce que** l'interface utilisateur comprend un éditeur de graphe.

15. Produit logiciel selon l'une des revendications 13 et 14, **caractérisé en ce que** l'interface utilisateur comprend un éditeur de règles.

16. Dispositif informatique de modélisation de processus comprenant une mémoire comportant, après modélisation de processus d'un utilisateur, au moins une représentation de processus de premier niveau (A) sous forme de réseau constitué d'une pluralité de tâches de premier niveau interconnectables et un mécanisme d'ensemble pour gérer le déroulement des tâches de premier niveau selon certaines conditions, **caractérisé en ce que** le processus de premier niveau (A) est associé à au moins un processus de deuxième niveau (B), chaque tâche de premier niveau (M1) étant associée à deux tâches successives interconnectées de deuxième niveau (E1,E10), une des deux tâches successives de deuxième niveau (E1) pouvant spécifier une fonction complexe prise en charge par la tâche de premier niveau (M1), l'autre tâche (E10) étant une tâche constante et **en ce que** le mécanisme d'ensemble est un séquenceur (5) unique capable, pour l'exécution d'une tâche de premier niveau (M1), de gérer au moins les deux tâches de deuxième niveau associées (E1, E10).

17. Dispositif informatique de modélisation de processus selon la revendication 16, **caractérisé en ce qu'**au moins une des deux étapes successives de deuxième niveau spécifiant une fonction complexe (E1) est associée à au moins un processus de troisième niveau (C) réalisant ladite fonction complexe exécutée par le séquenceur (5) unique, ledit processus de troisième niveau (C) comprenant au moins deux tâches de troisième niveau interconnectées (F1, F11).

18. Dispositif informatique de modélisation de processus selon l'une des revendications 16 à 17, **caractérisé en ce que** le séquenceur (5) unique est un algorithme d'exécution de tâches capable de s'appeler lui-même pour exécuter en parallèle une première tâche d'un certain niveau (M1) et au moins une deuxième tâche associée d'un autre niveau (E1, E10).

19. Dispositif informatique de modélisation de processus selon l'une des revendications précédentes, **caractérisé en ce que** certaines conditions comprennent la présence d'un élément appelé "jeton" associé à l'état d'avancement du processus.

20. Dispositif informatique de modélisation de processus selon l'une des revendications 16 à 19, **caractérisé en ce que** la représentation de processus de premier niveau (A) comprend une structure arborescente d'objets (Aa).

21. Dispositif informatique de modélisation de processus selon la revendication 20, **caractérisé en ce que** la structure arborescente d'objets (Aa) comprend au moins une tâche de premier niveau (M500) pouvant être associée à au moins une variable (V), cette tâche de premier niveau (M500) étant associée à au moins deux tâches successives (E500, E501) interconnectées du processus de deuxième niveau (Ba), au moins une des deux tâches ayant pour paramètre au moins ladite variable (V) et **en ce que** le séquenceur (5) unique est capable d'exécuter, à chaque tâche du processus de premier niveau (M500), au moins les deux tâches successives (E500, E501) de deuxième niveau (Ba) selon au moins ladite variable (V).

22. Dispositif informatique de modélisation de processus selon l'une des revendications 20 et 21, **caractérisé en ce que** la structure arborescente d'objets (Aa) comprend au moins une tâche de premier niveau (M500) pouvant être associée à au moins une règle (R), cette tâche de premier niveau étant associée à au moins deux tâches successives (E500, E501) interconnectées du processus de deuxième niveau (Ba), au moins une des deux tâches ayant pour paramètre au moins ladite règle (R) et **en ce que** le séquenceur (5) unique est capable d'exécuter, à chaque tâche du processus du premier niveau (M500), au moins les deux tâches successives de deuxième niveau (E500, E501) selon au moins ladite règle (R).

23. Dispositif informatique de modélisation de processus selon l'une des revendications 20 à 22, **caractérisé en ce que**, dans la structure arborescente d'objets, certaines des tâches de deuxième niveau spécifiant une fonction complexe (Ca) définissent une même fonction complexe (Ca).

24. Dispositif informatique de modélisation de processus selon la revendication 23, **caractérisé en ce que** ladite même fonction complexe (Ca) est désignée selon une variable globale passée en paramètre.

25. Produit logiciel comprenant une interface utilisateur propre à élaborer la représentation de processus du dispositif selon l'une des revendications 16 à 24.

26. Produit logiciel selon la revendication 25, **caractérisé en ce que** l'interface utilisateur comprend un éditeur de graphe.

27. Produit logiciel selon l'une des revendications 25 et 26, **caractérisé en ce que** l'interface utilisateur comprend un éditeur de règles.
